# FASCICULE DE BREVET EUROPEEN

(11) **EP 2 334 546 B1**
(45) Date de publication et mention de la délivrance du brevet: **22.05.2013**
(21) Numéro de dépôt: 09753155.2
(22) Date de dépôt: 29.09.2009
(51) Int. Cl.: B64C 1/12, B64C 3/26, F16B 5/00, B64C 1/06, B64F 5/00, B29C 70/28

(54) **ASSEMBLAGE DE PANNEAUX POUR FUSELAGE D'AERONEF**
VERBINDUNG ZWEIER PANEELE EINES FLUGZEUGRUMPFS
PANEL ASSEMBLY FOR AN AIRCRAFT FUSELAGE

(30) Priorité: 30.09.2008 FR 0856567
(43) Date de publication de la demande: 22.06.2011
(73) Titulaire: Airbus Operations, 31000 Toulouse (FR)
(72) Inventeur: CASTANET, Marc-Antoine, F-31830 Plaisance du Touch (FR)
(74) Mandataire: Ilgart, Jean-Christophe
(86) Numéro de dépôt international: PCT/FR2009/051847
(87) Numéro de publication internationale: WO 2010/037964

(56) Documents cités:
- EP-A- 1 504 888
- WO-A-94/01277
- WO-A-2007/071905
- DE-C1- 19 534 031
- US-A- 2 225 779
- US-A- 2 228 779
- US-A- 5 160 771
- US-A- 5 716 178

## Description

### DOMAINE TECHNIQUE

La présente invention se rapporte d'une façon générale au domaine des fuselages d'aéronefs.

Elle porte plus précisément sur l'assemblage d'au moins deux panneaux solidarisés l'un à l'autre au moyen de jonctions longitudinales par recouvrement, afin de former une partie du revêtement extérieur du fuselage. Cet assemblage est illustré par le document EP-A-1 504 888.

### ETAT DE LA TECHNIQUE ANTERIEURE

Classiquement, un fuselage d'aéronef comprend des panneaux métalliques montés et fixés autour d'une structure interne de manière à former, une fois assemblés, un revêtement extérieur aérodynamique.

Les panneaux métalliques sont habituellement réalisés en aluminium.

Ils sont fixés les uns aux autres au moyen de jonctions longitudinales par recouvrement et de jonctions circonférentielles.

L'assemblage d'une pluralité de panneaux au moyen de jonctions longitudinales par recouvrement permet de former des tronçons de fuselage. Le fuselage est ensuite obtenu par l'assemblage des différents tronçons à l'aide de jonctions circonférentielles.

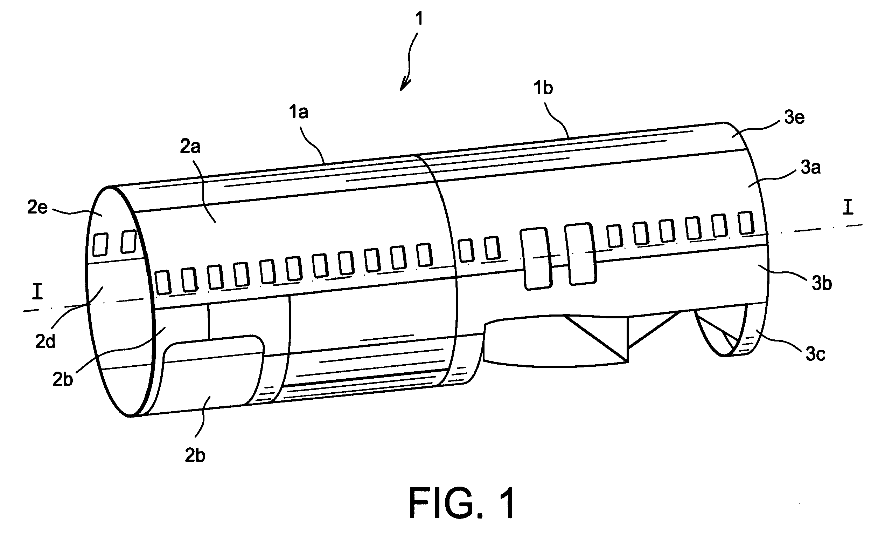

Comme le montre la figure 1, un tronçon de fuselage 1 comporte habituellement plusieurs parties de tronçon 1a, 1b assemblées entre elles. Le tronçon représenté est un exemple de tronçon central qui relie la pointe avant au cône arrière. La pointe avant est le tronçon qui comporte notamment le poste de pilotage, et le cône arrière comporte généralement l'empennage de l'aéronef.

Chaque partie de tronçon la, 1b est formée d'une pluralité de panneaux longitudinaux assemblés deux à deux. Ainsi, la partie 1a de tronçon comporte les panneaux notés 2a à 2e, et la partie 1b de tronçon comporte les panneaux notés 3a à 3e.

Les panneaux d'une même partie de tronçon sont assemblés deux à deux au moyen d'une jonction longitudinale par recouvrement, de manière à former un assemblage de panneaux.

On appelle « jonction longitudinale par recouvrement » un type de fixation dans lequel deux panneaux sont disposés de manière à se recouvrir partiellement, et fixés l'un à l'autre par des organes de fixation insérés dans la zone où les panneaux se superposent.

Des organes de fixation, par exemple des organes à sertir de type « lockbolt » ou des rivets, sont disposés dans ladite zone de recouvrement R et assurent la fixation des panneaux l'un avec l'autre.

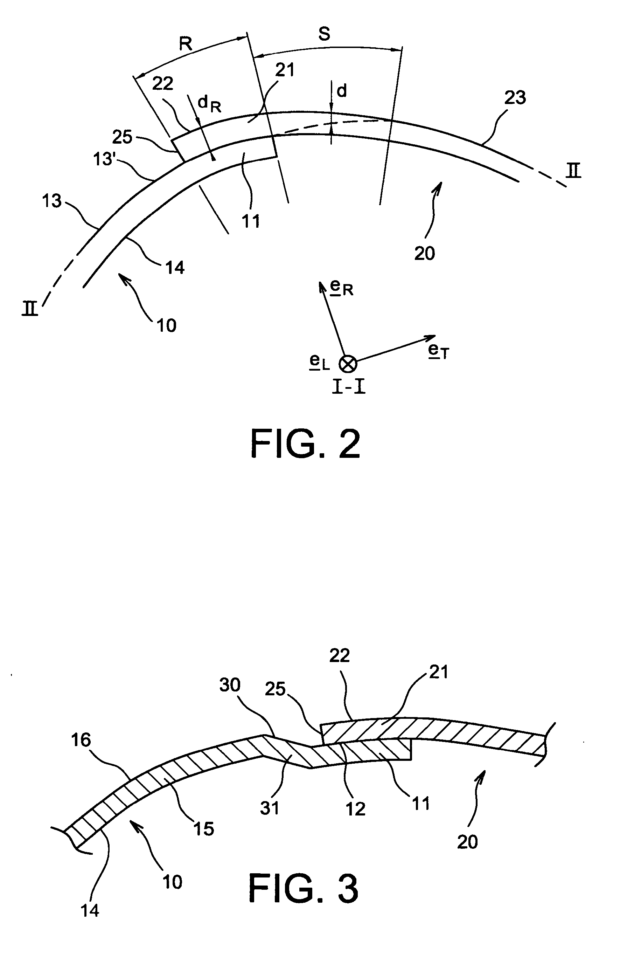

La figure 2 représente une vue en coupe transversale d'un exemple classique d'assemblage de panneaux, ledit assemblage comprenant deux panneaux longitudinaux successifs 10 et 20 solidarisés l'un à l'autre au moyen d'une jonction longitudinale par recouvrement.

Un repère orthogonal direct en coordonnées cylindriques (e_{L}, e_{R}, e_{T}) est présenté sur la figure 2. On appelle e_{L} la direction longitudinale du fuselage, orienté de l'avant à l'arrière de l'aéronef. Il coïncide avec l'axe longitudinal I-I qui correspond sensiblement à l'axe de révolution du fuselage (figure 1). e_{R} est la direction radiale d'un point quelconque appartenant à un élément de l'assemblage de panneaux et e_{T} est la direction tangentielle ou circonférentielle en ce point. L'axe circonférentiel II-II est défini comme une ligne dont la direction e_{T} est la tangente en chacun de ses points.

L'assemblage de panneaux selon l'art antérieur comporte un premier panneau 10 disposé de manière à ce que sa surface extérieure 13 coïncide sensiblement avec le profil aérodynamique théorique du fuselage.

La surface extérieure 13 du panneau 10 est définie par une distance radiale à l'axe longitudinal I-I supérieure à celle de la surface intérieure 14.

Le profil aérodynamique théorique du fuselage est la surface extérieure du revêtement extérieur aérodynamique en l'absence de toute discontinuité de niveau, ou de distance radiale à l'axe longitudinal I-I. Dans l'exemple de la figure 2, le profil théorique coïncide sensiblement avec l'axe circonférentiel II-II représenté en ligne pointillée.

Un second panneau 20 successif au premier est disposé de manière à, d'une part recouvrir partiellement le premier panneau 10, et d'autre part faire coïncider, à mesure que l'on s'éloigne du premier panneau 10, sa surface extérieure 23 avec le profil aérodynamique théorique du fuselage.

Le premier panneau 10 comporte ainsi une première portion d'extrémité 11 recouverte par une seconde portion d'extrémité 21 du second panneau 20.

La zone dans laquelle les deux portions d'extrémité 11 et 21 sont superposées est dite zone de recouvrement R, ou zone de jonction. Elle s'étend suivant un axe sensiblement parallèle à l'axe longitudinal I-I.

La figure 2 montre clairement que la jonction longitudinale selon l'art antérieur engendre un décrochement entre la surface extérieure 13 du premier panneau 10 et la surface extérieure 23 du second panneau 20.

Plus précisément, il y a décrochement entre la surface extérieure 13' de la portion du premier panneau 10 s'étendant à partir de la première portion d'extrémité 11, et la surface extérieure 22 de la seconde portion d'extrémité 21 du second panneau 20.

Par décrochement, on entend une différence de niveau, ou plus précisément de distance radiale à l'axe longitudinal I-I, ici entre les deux surfaces extérieures 13' et 22. Ce décrochement forme une discontinuité de la surface extérieure du revêtement extérieur aérodynamique du fuselage.

Ce type de jonction longitudinale par recouvrement présente alors certains inconvénients.

D'une part, le décrochement rend le champ 25 de la seconde portion d'extrémité 21 soumis à l'impact de l'écoulement aérodynamique de l'air.

Cela entraîne une fatigue prématurée du matériau de ladite seconde portion d'extrémité 21, et rend nécessaire une surveillance et un entretien accrus des panneaux du fuselage.

D'autre part, le décrochement crée des zones de saillie externe du second panneau vis-à-vis du profil aérodynamique théorique du fuselage, qui ont tendance à augmenter la traînée aérodynamique du fuselage.

En effet, la seconde portion d'extrémité 21 est disposée à l'extérieur du profil aérodynamique théorique, c'est-à-dire que la distance radiale à l'axe longitudinal de cette portion d'extrémité 21 est supérieure à celle du profil théorique. Elle est ainsi en saillie externe vis-à-vis du profil aérodynamique théorique.

La zone de recouvrement est donc une zone de saillie externe de la seconde extrémité, dans laquelle la distance de saillie *d=d_{R}* correspond sensiblement à l'épaisseur de la seconde portion d'extrémité 21.

La distance de saillie d correspond ici à l'écart de niveau entre la surface extérieure 22, 23 du second panneau 20 et le profil aérodynamique théorique. Cette distance est mesurée perpendiculairement à la surface extérieure dudit panneau 20. Par épaisseur de panneau, on entend la dimension du panneau suivant la direction perpendiculaire à sa surface extérieure 22, 23.

Par ailleurs, le second panneau 20 présente une déformation suivant l'axe circonférentiel, à mesure que l'on s'éloigne de la zone de recouvrement R, de manière à raccorder la portion d'extrémité avec le profil aérodynamique théorique.

Cette déformation s'étend suivant l'axe circonférentiel II-II à partir de la jonction longitudinale et forme ainsi une seconde zone de saillie externe S du second panneau 20 par rapport au profil aérodynamique théorique.

A mesure que l'on s'éloigne de la zone de recouvrement R, la distance de saillie d diminue de la valeur *d_{R}* à zéro, pour lequel la surface extérieure du second panneau correspond au profil aérodynamique théorique du fuselage.

Ces deux zones de saillie externe R, S du second panneau par rapport au profil aérodynamique théorique ont un impact négatif sur la traînée aérodynamique du fuselage.

En effet, le profil aérodynamique théorique est défini de manière à minimiser la traînée aérodynamique. Tout écart au profil théorique entraîne *de facto* une perturbation de l'écoulement aérodynamique de l'air et ainsi une augmentation de la traînée. Cela se traduit notamment par une consommation accrue en carburant lors du vol de l'aéronef.

Il est à noter que ces problèmes, présentés ici dans le cadre d'une jonction longitudinale, se posent également pour tout type de jonction assurant l'assemblage de panneaux d'un fuselage d'aéronef, notamment pour les jonctions circonférentielles.

Les documents US 2 228 779 et DE 1 500 729 décrivent un assemblage de deux panneaux 10, 20 métalliques ou en matériau composite, solidarisés l'un à l'autre au niveau de leurs portions d'extrémité respectives 11, 21. Comme le montre la figure 3, le premier panneau 10 comporte une dénivellation 30 en regard de laquelle est agencé le champ 25 de la portion d'extrémité 21 du second panneau 20. Cette dénivellation étant réalisée par soyage, l'épaisseur du premier panneau 10 est sensiblement constante au niveau de ladite dénivellation 30. En conséquence, la surface intérieure 14 du premier panneau 10 présente également une dénivellation, dite dénivellation intérieure, disposée sensiblement en regard de la première dénivellation 30. Aussi, ladite surface intérieure 14 n'est plus globalement concave mais présente une zone convexe située à la jointure entre la dénivellation intérieure et la portion d'extrémité 11.
Cette solution présente néanmoins l'inconvénient de dégrader de manière importante la tenue mécanique du premier panneau, et par suite, de l'assemblage de panneaux. En effet, la dénivellation de la surface intérieure du premier panneau obtenue par le soyage traduit une zone de modification locale de la forme globale du premier panneau, plus précisément du rayon de courbure global de celui-ci. Aussi, les contraintes mécaniques subies par le premier panneau ont tendance à s'y concentrer naturellement. Cette zone est alors une zone prédéterminée de fragilité propice à la rupture.

Par ailleurs, il convient de rappeler que le soyage est par définition assez 'martyrisant' et fatigue les pièces avant même qu'elles ne soient montées sur l'avion. Ainsi, lors de la réalisation du soyage dans les pièces structurales métalliques dites « primaires », il est fréquent d'observer la formation de criques au niveau desdites dénivellations, signe d'une dégradation locale des performances mécaniques de ladite pièce structurale.

De plus, la réalisation d'un soyage d'un panneau métallique nécessite une reprise de formage spécifique techniquement complexe et ainsi économiquement coûteuse.

### EXPOSÉ DE L'INVENTION

L'invention a principalement pour but de présenter un assemblage de panneaux pour fuselage d'aéronef, remédiant au moins en partie aux inconvénients mentionnés ci-dessus relatifs aux réalisations de l'art antérieur décrites en référence aux figures 2 et 3.

Pour ce faire, l'invention a pour objet un assemblage de panneaux pour fuselage d'aéronef, dans lequel un premier panneau et un second panneau présentent respectivement une première portion d'extrémité et une seconde portion d'extrémité se recouvrant et solidarisées l'une à l'autre.

Selon l'invention, ledit assemblage comporte, s'étendant à partir de ladite première portion d'extrémité, une dénivellation en regard de laquelle est agencé le champ de ladite seconde portion d'extrémité, la surface intérieure dudit premier panneau étant dépourvue de dénivellation.

Ainsi, l'impact de l'écoulement aérodynamique de l'air sur le champ de ladite seconde portion d'extrémité est sensiblement minimisé par la présence de ladite dénivellation. Le problème de fatigue prématurée du matériau formant ladite seconde portion d'extrémité est ainsi fortement diminué, voire écarté.

Dans le même temps, l'absence de dénivellation au niveau de la surface intérieure traduit le fait que la forme globale du premier panneau, plus précisément le rayon de courbure global de celui-ci, n'est pas modifiée par la présence de ladite dénivellation. En effet, la surface intérieure du premier panneau reste globalement concave et ne présente pas de zone convexe.

A la différence des exemples de l'art antérieur mentionnés précédemment, l'invention présente une solution qui assure la continuité aérodynamique sans que les performances mécaniques du premier panneau ne soient dégradées.

De préférence, la dénivellation relie un palier inférieur appartenant à ladite première portion d'extrémité et un palier supérieur, ledit palier supérieur et la surface supérieure de ladite seconde portion d'extrémité étant disposés de manière à assurer une sensible continuité aérodynamique.

Ainsi, l'assemblage de panneaux selon l'invention ne présente pas de décrochement susceptible de perturber l'écoulement aérodynamique de l'air et d'augmenter ainsi la traînée du fuselage.

Le premier panneau peut être réalisé en matériau composite et comprendre un premier empilement de plis dont une extrémité forme ladite dénivellation, et un second empilement de plis, au moins partiellement superposés audit premier empilement de plis, dont une partie d'extrémité forme ladite première portion d'extrémité, ledit second empilement de plis formant ladite surface intérieure dudit premier panneau.

La surface intérieure du premier panneau n'est alors pas modifiée par la présence de ladite dénivellation. Elle reste globalement concave et ne présente pas de zone convexe. En conséquence, le premier panneau présente une tenue mécanique non dégradée.

Selon l'invention, un élément rapporté de mise à niveau est assemblé audit premier panneau de manière à former ladite dénivellation.

Ledit élément rapporté de mise à niveau peut alors être assemblé par stratification audit premier panneau.

Alternativement, et dans le cas où le premier panneau et ledit élément de mise à niveau sont réalisés en matériau composite, l'élément de mise à niveau peut être assemblé par co-cuisson audit premier panneau.

La surface intérieure du premier panneau n'est pas modifiée par la présence de ladite dénivellation formée par la pièce rapportée. Elle reste globalement concave et ne présente pas de zone convexe. En conséquence, le premier panneau présente une tenue mécanique non dégradée.

D'une manière générale, les premier et second panneaux sont en matériau composite.

Ainsi, les différentes techniques de formation de ladite dénivellation citées précédemment peuvent être réalisées simplement sans difficulté industrielle particulière.

Dans le cas d'un assemblage de panneaux selon l'art antérieur, ces techniques ne peuvent être mises en oeuvre simplement.

En effet, les panneaux métalliques sont obtenus à partir de tôles d'aluminium par des procédés de formage tel que le roulage ou l'étirage. La mise en forme des panneaux est réalisée au profil aérodynamique théorique de l'aéronef.

La formation de la dénivellation par variation d'épaisseur présente une difficulté technique importante et engendre ainsi un coût prohibitif.

En effet, le panneau formé est d'épaisseur constante. Toute variation d'épaisseur du panneau est obtenue par enlèvement de matière, soit par usinage chimique, soit par usinage mécanique, par exemple à l'aide de techniques décrites dans les demandes de brevet EP1564135 et EP1569058 déposées au nom de la demanderesse. Il est alors nécessaire de former un panneau épais à un profil différent du profil théorique, puis d'usiner la quasi-totalité du panneau pour obtenir le profil voulu. On comprend que cette technique est habituellement écartée.

L'invention a également pour objet un tronçon de fuselage d'aéronef, comportant au moins un assemblage de panneaux selon l'une quelconque des caractéristiques ci-dessus.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La figure 1, déjà décrite, est une vue en perspective d'un exemple de tronçon central de fuselage d'aéronef comportant une pluralité de panneaux assemblés ;
La figure 2, déjà décrite, est une vue en coupe transversale d'un assemblage de panneaux selon l'art antérieur, dans lequel deux panneaux sont solidarisés l'un à l'autre au moyen d'une jonction longitudinale par recouvrement ;
La figure 3, déjà décrite, est une vue en coupe transversale d'un assemblage de panneaux selon un autre exemple de l'art antérieur, dans lequel la dénivellation est réalisée par soyage du premier panneau ;
La figure 4 est une vue en coupe transversale d'un assemblage de panneaux, dans lequel la dénivellation est réalisée par un empilement de plis appartenant au premier panneau ;
La figure 5 est une vue en coupe transversale d'un assemblage de panneaux selon un mode de réalisation de l'invention, dans lequel la dénivellation est formée par un élément rapporté de mise à niveau assemblé au premier panneau par stratification ;
La figure 6 est une vue en coupe transversale d'un assemblage de panneaux selon une variante du mode de réalisation représenté sur la figure 5, dans lequel l'élément rapporté de mise à niveau est assemblé au premier panneau par co-cuisson ; et
La figure 7 est une vue en perspective d'un tronçon central de fuselage comprenant au moins un assemblage de panneaux selon l'invention.

### EXPOSÉ DÉTAILLÉ D'UN MODE DE RÉALISATION PREFERE

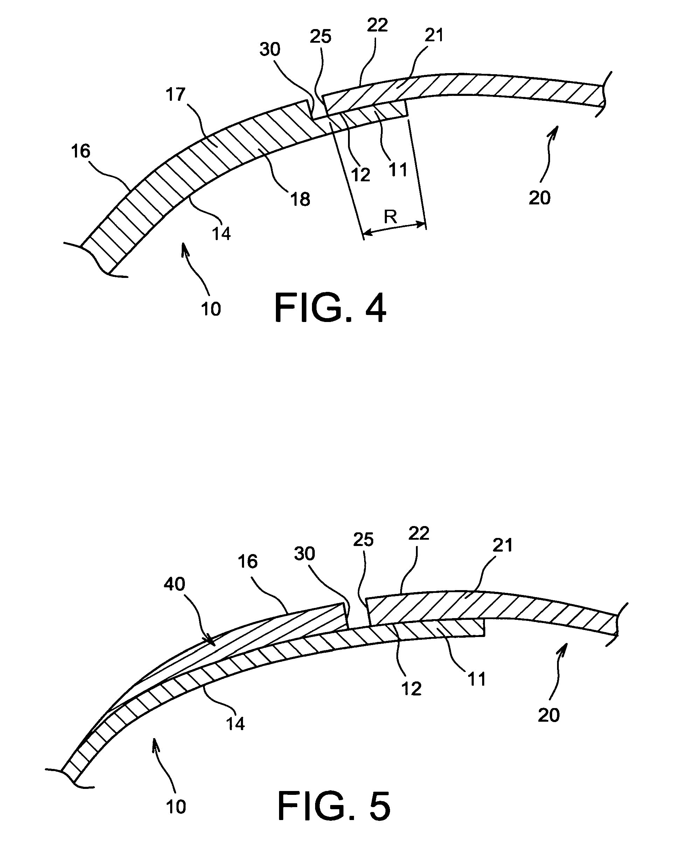

Comme l'illustre schématiquement les figures 4 à 7, l'assemblage de panneaux pour fuselage d'aéronef selon l'invention comprend un premier panneau 10 et un second panneau 20, présentant respectivement une première portion d'extrémité 11 et une seconde portion d'extrémité 21 se recouvrant et solidarisées l'une à l'autre.

Cet assemblage de panneaux est réalisé dans le but de former une partie du revêtement extérieur du fuselage.

L'invention est par la suite décrite dans le cadre non limitatif d'un assemblage de panneaux au moyen d'une jonction longitudinale par recouvrement. La zone de recouvrement formée par lesdites portions d'extrémité s'étend alors sensiblement suivant l'axe longitudinal du fuselage.

De préférence, lesdits panneaux 10 et 20 sont réalisés en matériau composite comprenant un mélange de fibres et de résine.

Un panneau en matériau composite comprend une peau formée d'au moins un empilement consolidé de plis de tissus ou de nappes de fibres pré-imprégnées unidirectionnelles d'une résine appropriée.

La nature des fibres utilisées dans les différents ensembles de fibres ainsi que la nature de la résine dans laquelle sont noyées les fibres sont choisies selon l'application envisagée parmi les fibres et les résines utilisées habituellement dans le domaine des matériaux composites. Ainsi, les fibres peuvent être des fibres de carbone, des fibres de verre ou des fibres aramides, de préférence des fibres de carbone, et la résine une résine thermodurcissable telle qu'une résine phénolique ou de type époxy.

L'assemblage de panneaux comporte, s'étendant à partir de ladite première portion d'extrémité, une dénivellation 30 en regard de laquelle est agencé le champ 25 de ladite seconde portion d'extrémité 21.

Sur la figure 4, on a représenté une vue en coupe transversale d'un assemblage de panneaux,

La dénivellation 30 est formée entièrement par le premier panneau 10. La dénivellation 30 n'est pas réalisée par soyage, mais est obtenue par une disposition originale des empilements de plis qui le composent.

Le premier panneau 10 comprend au moins deux empilements de plis 17 et 18, un empilement supérieur 17 et un empilement inférieur 18, au moins partiellement superposés l'un à l'autre.

De préférence, les empilements supérieur 17 et inférieur 18 du premier panneau 10 sont réalisés à partir de fibres de carbone.

L'empilement supérieur 17 s'étend sur une partie de l'empilement inférieur 18. Une extrémité, ou un champ, de l'empilement supérieur forme ladite dénivellation 30, alors que l'empilement inférieur 18 se prolonge en une partie d'extrémité 11 formant la première portion d'extrémité 11 du premier panneau 10.

Ainsi, la première portion d'extrémité 11 est réalisée d'un seul tenant avec ledit premier panneau 10.

La dénivellation 30 est ainsi formée par le champ de l'empilement supérieur 17. Elle sépare le palier supérieur 16 correspondant à la surface extérieure de l'empilement supérieur 17, du palier inférieur 12 correspondant à la surface extérieure de la partie d'extrémité 11 de l'empilement inférieur 18.

Par surface extérieure, on entend la surface destinée à être en contact avec l'écoulement aérodynamique de l'air lorsque l'aéronef est en vol. La surface intérieure est définie en opposition à la surface extérieure, et présente un rapprochement radial à l'axe longitudinal du fuselage par rapport à la surface extérieure.

On parle également de surface « extérieure » pour la première portion d'extrémité 11, bien qu'elle ne soit pas destinée à être en contact avec l'écoulement de l'air puisqu'elle est en contact avec le second panneau 20.

La seconde portion d'extrémité 21 du second panneau 20 est en appui contre la surface extérieure 12 de la première portion d'extrémité 11, de manière à former une zone de recouvrement R.

Ainsi, le champ 25 de la seconde portion d'extrémité 21 est en regard de la dénivellation 30.

Comme le montre la figure 4, le champ de l'empilement supérieur 17 peut être droit, formant ainsi une dénivellation 30 sensiblement perpendiculaire au palier inférieur 12.

Alternativement, l'empilement supérieur 17 peut présenter un lâcher de plis, c'est-à-dire une disposition en biseau ou en étages ou gradins des plis. Le lâcher de plis forme alors un champ incliné et donc une dénivellation 30 inclinée.

De préférence, la dénivellation 30 présente alors une pente moyenne de l'ordre de 1/20.

De préférence, le palier supérieur 16 et la surface extérieure 22 de la seconde portion d'extrémité 21 assurent une sensible continuité aérodynamique.

Pour cela, le palier supérieur 16 et la surface extérieure 22 de la seconde portion d'extrémité 21 sont disposés de manière à ne pas former de décrochement, ou de différence de niveau.

En d'autres termes, la hauteur de la dénivellation 30, c'est-à-dire l'épaisseur de l'empilement supérieur 17 de plis ou la différence de niveau entre les paliers supérieur 16 et inférieur 12, correspond sensiblement à l'épaisseur de la seconde portion d'extrémité 21.

Par ailleurs, du fait de cette disposition originale des empilements de plis qui composent le premier panneau 10, la surface intérieure 14 de celui-ci est dépourvue de dénivellation. Ladite surface intérieure 14 est alors globalement concave et ne présente donc pas de zone convexe. La forme globale du premier panneau, plus précisément le rayon de courbure global de celui-ci, n'est pas modifiée par la présence de ladite dénivellation.

Enfin, les deux portions d'extrémité 11 et 21 sont solidarisées l'une avec l'autre. Pour cela, des organes de fixation (non représentés), par exemple des organes à sertir de type « lockbolt » ou des rivets, peuvent être disposés dans ladite zone de recouvrement R pour assurer la fixation des panneaux l'un avec l'autre.

La figure 5 est une vue en coupe transversale d'un mode de réalisation de l'invention.

Les références numériques identiques à celles de la figure 4 désignent des éléments identiques ou similaires.

Selon ce mode de réalisation, la dénivellation 30 est réalisée par un élément rapporté 40 de mise à niveau, assemblé audit premier panneau 10.

Un élément rapporté 40 de mise à niveau est monté sur le premier panneau 10, de sorte qu'une surface d'extrémité 30 dudit élément rapporté 40 est en regard avec le champ 25 de la seconde portion d'extrémité 21.

Cette surface d'extrémité 30 définit alors ladite dénivellation 30.

La dénivellation 30 sépare alors un palier inférieur 12, correspondant à la surface extérieure de la première portion d'extrémité 11, d'un palier supérieur 16, correspondant à la surface extérieure de l'élément rapporté 40.

La forme en coupe transversale dudit élément rapporté 40 peut être sensiblement triangulaire ou trapézoïdale.

Plus précisément, l'épaisseur dudit élément rapporté 40 peut présenter une épaisseur qui augmente à mesure que l'on se rapproche du champ 25 de la seconde portion d'extrémité 21.

L'épaisseur dudit élément 40 au niveau de la dénivellation 30 est avantageusement sensiblement égale à celle de la seconde portion d'extrémité 21, de manière à assurer une sensible continuité aérodynamique entre la surface extérieure 16 dudit élément 40 et la surface extérieure 22 de la seconde portion d'extrémité 21.

Dans ce cas, la dénivellation 30 est sensiblement droite, c'est-à-dire sensiblement perpendiculaire au palier inférieur 12.

Alternativement, la dénivellation 30 peut être inclinée et présenter une pente moyenne de l'ordre de 1/20.

L'élément rapporté 40 peut être réalisé dans un matériau présentant une densité de préférence sensiblement égale ou inférieure à celle du matériau du premier panneau 10.

Il peut avantageusement être réalisé en balsa, qui présente une densité de l'ordre de 0,14.

L'élément rapporté 40 est avantageusement assemblé audit premier panneau 10 par la technique connue de la stratification. Par exemple, au moins un pli de verre peut être disposé de manière à recouvrir au moins partiellement ledit élément rapporté 40 et ledit premier panneau 10. Le premier panneau 10 peut comprendre alors au moins un empilement de plis de fibres de renfort qui s'étend jusqu'à la première portion d'extrémité 11.

Par ailleurs, du fait de l'utilisation de ladite pièce rapportée 40, la surface intérieure 14 du premier panneau 10 est dépourvue de dénivellation. Ladite surface intérieure 14 est alors globalement concave et ne présente donc pas de zone convexe. La forme globale du premier panneau, plus précisément le rayon de courbure global de celui-ci, n'est pas modifiée par la présence de ladite dénivellation.

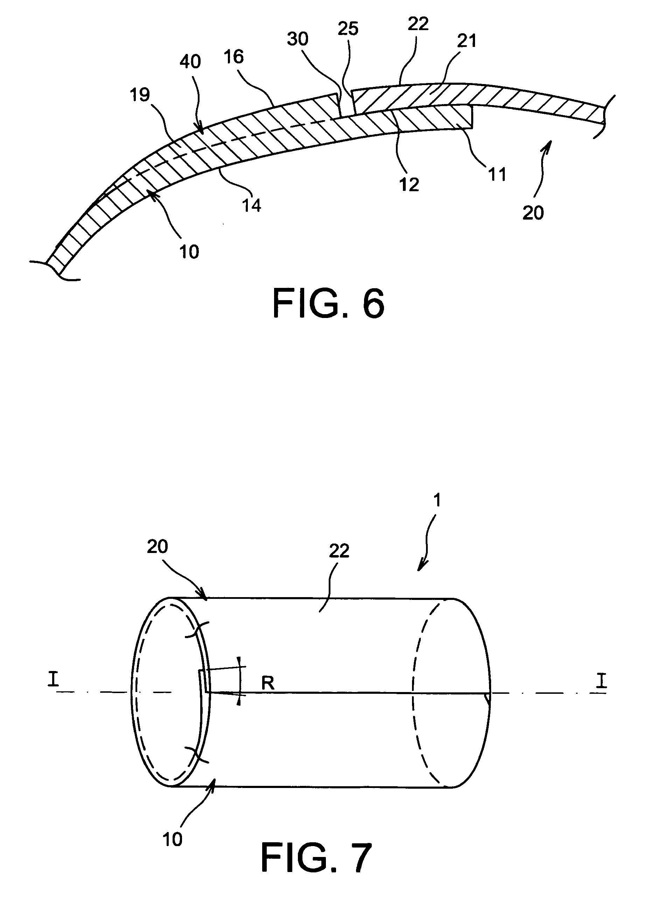

La figure 6 est une vue en coupe transversale d'une variante du mode de réalisation de l'invention représenté sur la figure 5.

Les références numériques identiques à celles de la figure 5 désignent des éléments identiques ou similaires.

Cette variante se distingue du mode de réalisation représenté sur la figure 5 par le fait que ledit élément rapporté 40 est formé par un empilement 19 de plis dont les fibres ne participent pas à la définition dudit premier panneau 10. On parle alors de « plis morts ».

Cet empilement 19 peut être composé de fibres de même nature que celles dudit premier panneau 10 ou de nature différente.

Par exemple, dans le cas d'un premier panneau 10 réalisé en fibres de carbone, ledit élément rapporté 40 peut être réalisé en fibres de verre.

De préférence, la résine dudit élément rapporté 40 est identique à celle du premier panneau 10, de sorte que ledit élément 40 soit assemblé audit premier panneau 10 par la technique connue de la co-cuisson.

La dénivellation 30 dudit élément rapporté 40 selon cette variante présente les mêmes caractéristiques que celles décrites dans le mode de réalisation de la figure 5.

Cette variante présente le même avantage relatif à la tenue mécanique du premier panneau que celui du second mode de réalisation.

La figure 7 est une vue en perspective d'un tronçon de fuselage, de préférence un tronçon central.

Une partie du revêtement extérieur du tronçon comprend au moins un assemblage de panneaux selon l'invention.

Les panneaux 10 et 20 sont des panneaux longitudinaux, et la zone de recouvrement R s'étend sensiblement suivant l'axe longitudinal I-I du fuselage.

Lesdits panneaux peuvent s'étendre suivant toute la longueur du tronçon, suivant l'axe longitudinal I-I, ou sur une portion longitudinale du tronçon.

La surface extérieure 22 du second panneau 20 coïncide sensiblement avec le profil aérodynamique théorique du fuselage.

Il est à noter que les différents modes de réalisation décrits précédemment peuvent tout à la fois s'appliquer aux jonctions longitudinales qu'aux jonctions circonférentielles.

Dans le cas d'une jonction longitudinale, il est avantageux que la surface extérieure 22, 23 du second panneau 20 coïncide sensiblement avec le profil aérodynamique théorique du fuselage.

On remarque, qu'à la différence de l'art antérieur, l'assemblage de panneaux ne présente pas de zone de saillie externe du second panneau 20 par rapport au profil aérodynamique théorique.

Par ailleurs, il est avantageux que le palier supérieur 16, formé par le premier panneau 10 ou par un élément rapporté 40, coïncide sensiblement avec le profil aérodynamique théorique du fuselage.

Ainsi, tout en minimisant l'impact de l'écoulement aérodynamique de l'air sur le champ de la seconde portion d'extrémité, l'assemblage de panneaux selon l'invention ne présente aucune zone de saillie externe. Aussi, la traînée aérodynamique n'est pas perturbée et les performances de l'aéronef sont préservées.

Bien entendu, diverses modifications dans le cadre du texte des revendications peuvent être apportées par l'homme du métier à l'invention qui vient d'être décrite, uniquement à titre d'exemples non limitatifs.

## Revendications

1. Assemblage de panneaux pour fuselage d'aéronef, comprenant un premier panneau (10) et un second panneau (20) présentant respectivement une première portion d'extrémité (11) et une seconde portion d'extrémité (21) se recouvrant et solidarisées l'une à l'autre, ainsi que, s'étendant à partir de ladite première portion d'extrémité (11), une dénivellation (30) en regard de laquelle est agencé le champ (25) de ladite seconde portion d'extrémité (21), ladite dénivellation (30) reliant un palier inférieur (12) appartenant à ladite première portion d'extrémité (11) et un palier supérieur (16), ledit palier supérieur (16) et la surface supérieure (22) de ladite seconde portion d'extrémité (21) étant disposés de manière à assurer une sensible continuité aérodynamique, et ledit premier panneau (10) comportant une surface intérieure (14), qui est opposée à une surface extérieure de celui-ci destinée à être en contact avec l'écoulement aérodynamique de l'air lorsque l'aéronef équipé dudit assemblage est en vol, et qui est dépourvue de dénivellation, ledit assemblage étant **caractérisé en ce qu'**il comprend un élément rapporté (40) de mise à niveau assemblé audit premier panneau (10) de manière à former ladite dénivellation (30) et dont une surface extérieure forme ledit palier supérieur (16), ledit élément rapporté (40) présentant une épaisseur qui augmente à mesure que l'on se rapproche du champ (25) de ladite seconde portion d'extrémité (21).

2. Assemblage de panneaux selon la revendication 1, **caractérisé en ce que** ledit élément rapporté (40) est de forme sensiblement triangulaire ou trapézoïdale en coupe selon un plan orthogonal audit champ (25) de ladite seconde portion d'extrémité (21).

3. Assemblage de panneaux selon la revendication 1 ou 2, **caractérisé en ce que** le premier panneau (10) est en matériau composite, ledit élément rapporté (40) de mise à niveau étant assemblé par stratification audit premier panneau (10).

4. Assemblage de panneaux selon la revendication 1 ou 2, **caractérisé en ce que** le premier panneau (10) et ledit élément rapporté (40) de mise à niveau sont réalisés en matériau composite, l'élément rapporté (40) de mise à niveau étant assemblé par co-cuisson audit premier panneau (10).

5. Assemblage de panneaux selon l'une quelconque des revendications 1 à 4, **caractérisé en ce que** le premier panneau (10) et le second panneau (20) sont en matériau composite.

6. Tronçon de fuselage d'aéronef, comportant au moins un assemblage de panneaux selon l'une quelconque des revendications 1 à 5.

## Patentansprüche

1. Verbindung von Paneelen eines Flugzeugrumpfes, umfassend ein erstes Paneel (10) und ein zweites Paneel (20) mit respektive einem ersten Endabschnitt (11) und einem zweiten Endabschnitt (21), die sich überdecken und aneinander befestigt sind, sowie einen von dem ersten Endabschnitt (11) ausgehenden Höhenunterschied (30), der der Kante (champ) (25) des genannten zweiten Endabschnitts (21) gegenübersteht, wobei der genannte Höhenunterschied (30) ein zu dem genannten ersten Endabschnitt (11) gehörendes unteres Niveau (palier) (12) und ein oberes Niveau (palier) (16) verbindet, und das genannte obere Niveau (16) und die obere Oberfläche (22) des genannten zweiten Endabschnitts (21) so angeordnet sind, dass sie eine sensible aerodynamische Kontinuität gewährleisten, und das genannte erste Paneel (10) eine Innenoberfläche (14) aufweist, die einer Außenoberfläche von diesem entgegengesetzt ist, die für den Kontakt mit der aerodynamischen Strömung der Luft bestimmt ist, wenn das mit der genannten Verbindung ausgestattete Flugzeug sich im Flug befindet, und die keinen Höhenunterschied aufweist, wobei die genannte Verbindung **dadurch gekennzeichnet ist, dass** sie ein an das erste Paneel (10) angestücktes, den Höhenunterschied (30) bildendes Niveauangleichungselement (40) umfasst, von dem eine Außenoberfläche das genannte obere Niveau (16) bildet, wobei das angestückte Element (40) eine Dicke aufweist, die in dem Maße zunimmt, wie man sich der Kante (25) des genannten Endabschnitts (21) nähert.

2. Verbindung von Paneelen nach Anspruch 1, **dadurch gekennzeichnet, dass** das genannte angestückte Element (40) im Schnitt gemäß einer zu der genannten Kante (25) des genannten zweiten Endabschnitts (21) senkrechten Ebene im Wesentlichen dreieckig oder trapezförmig ist.

3. Verbindung von Paneelen nach Anspruch 1 oder 2, **dadurch gekennzeichnet, dass** das erste Paneel (10) aus Verbundwerkstoff ist, wobei das genannte angestückte Niveauangleichungselement (40) durch Schichtung mit dem ersten Paneel (10) zusammengebaut wird.

4. Verbindung von Paneelen nach Anspruch 1 oder 2, **dadurch gekennzeichnet, dass** das erste Paneel (10) und das genannte angestückte Niveauangleichungselement (40) aus Verbundwerkstoff sind, wobei das angestückte Niveauangleichungselement (40) und das genannte erste Paneel (10) durch die gemeinsame Härtung, der sie unterzogen werden, zusammengebaut werden.

5. Verbindung von Paneelen nach Anspruch 1 bis 4, **dadurch gekennzeichnet, dass** das erste Paneel (10) und das zweite Paneel (20) aus Verbundwerkstoff sind.

6. Flugzeugrumpf-Teilstück, wenigstens eine Verbindung von Paneelen nach einem der Ansprüche 1 bis 5 umfassend.

## Claims

1. A panel assembly for an aircraft fuselage, comprising a first panel (10) and a second panel (20) having respectively a first end portion (11) and a second end portion (21) covering each other and fastened to each other, as well as, extending from said first end portion (11), an elevation (30) facing which is arranged the edge (25) of said second end portion (21), said elevation (30) connecting a lower bearing (12) belonging to said first end portion (11) and a upper bearing (16), said upper bearing (16) and the upper surface (22) of said second end portion (21) being provided so as to ensure a substantial aerodynamic continuity, and said first panel (10) including an inner surface (14), which is opposite to an outer surface thereof for being in contact with the aerodynamic flow when the aircraft equipped with said assembly is in flight, and which is free of elevation, said assembly being **characterised in that** it comprises a levelling embedded element (40) assembled to said first panel (10) so as to form said elevation (30) and an outer surface of which forms said upper bearing (16), said embedded element (40) having a thickness which increases as the distance from the edge (25) of said second end portion (21) decreases.

2. The panel assembly according to claim 1, **characterised in that** said embedded element (40) is substantially triangular or trapezoidal shaped in cross-section along a plane orthogonal to said field (25) of said second end portion (21).

3. The panel assembly according to claim 1 or 2, **characterised in that** the first panel (10) is of composite material, said levelling embedded element (40) being assembled by laminating to said first panel (10).

4. The panel assembly according to claim 1 or 2, **characterised in that** the first panel (10) and said levelling embedded element (40) are made of composite material, said levelling embedded element (40) being assembled by co-curing to said first panel (10).

5. The panel assembly according to any of claims 1 to 4, **characterised in that** the first panel (10) and the second panel (20) are of composite material.

6. An aircraft fuselage section, including at least one panel assembly according to any of claims 1 to 5.
